# EUROPEAN PATENT SPECIFICATION

(11) **EP 2 485 880 B1**
(45) Date of publication and mention of the grant of the patent: **26.12.2018**
(21) Application number: 10821626.8
(22) Date of filing: 08.10.2010
(51) Int. Cl.: B27K 3/15, B27K 3/50, C08G 63/02, C08L 97/02

(54) **IMPREGNATION OF CHEMICALS INTO WOOD**
IMPRÄGNIERUNG VON CHEMIKALIEN IN HOLZ
IMPRÉGNATION DE PRODUITS CHIMIQUES DANS DU BOIS

(30) Priority: 08.10.2009 FI 20096037
(43) Date of publication of application: 15.08.2012
(73) Proprietor: UPM Plywood Oy, 15140 Lahti (FI)
(72) Inventor: KILJUNEN, Samantha, FI-53500 Lappeenranta (FI); KOSKI, Anna, FI-15610 Lahti (FI); KUNTTU, Mika, FI-15840 Lahti (FI); VALKONEN, Tiina, FI-15540 Villähde (FI)
(74) Representative: Papula Oy
(86) International application number: PCT/FI2010/050783
(87) International publication number: WO 2011/042609

(56) References cited:
- WO-A1-2005/016606
- WO-A1-2005/042175
- US-A- 4 276 329
- US-A- 5 770 319
- US-A1- 2008 246 177
- US-A1- 2009 011 214
- US-A1- 2009 011 214

## Description

### FIELD OF THE INVENTION

The invention relates to a method for impregnating chemicals into wood as defined in the preamble of claim 1.

### BACKGROUND OF THE INVENTION

Known from prior art are various wood boards, e.g. plywoods, veneer boards or the like. Known from prior art is the gluing of veneers for providing a wood board.

Known from prior art are different types of chemicals and adhesive compositions, e.g. a polyurethane or phenolic glue, to be used in connection with the wood boards. Further, known from prior art are different coatings for the wood boards.

Currently wood is protected by either incorporating materials into the coatings or by pressure impregnation of chemicals. The coatings are usually not very adequate. They can increase water repellency but they don't impart dimensional stability, or in the case of fire retardancy, coating does not render the wood fire resistant. To incorporate chemicals into wood either into the lumen, wood vessels, pits and cell wall very often vacuum-pressure impregnation is used, and it is possible to impregnate veneers, plywood partially and timber. This technique gives deep penetration, but usually this method is expensive and creates also problems. Impregnation of plywood using pressure vessels is not fully successful owing to the glue-line. The vacuum-pressure impregnation of the plywood is basically the surface veneer impregnation added with edge protection. Furthermore, the geometry of the pressure vessels like cylinder is not ideal for plywood; there is room only for a few panels in one batch. This batch type impregnation process actually slows the plywood manufacturing process. In addition to this pressure impregnation destroys the wood cell membranes, might induce surface and internal cracks and only results in impregnation into the sapwood of woods such as spruce.

There are a number of technologies developed that utilise soaking and spraying to impregnate wood veneers in dry and green state. There are even inventions where hot-cold baths have been utilised for solid wood; however, there are not any solution where the process as been used as an alternative to vacuum pressure impregnation to impregnate a veneer. Also, the chitosan, cross-linking agents and catalyst have been used to cross-link cotton for textile industry but altogether not for modification of the wood cell wall.

US patent 4657789 teaches us impregnation of a veneer with chemicals to resist micro-organisms and insects, fire retardants and pigments. The impregnation is applied by immersion, spraying, passing through rollers of green wood. The invention does not impart dimensional stability and the chemicals are only absorbed into the wood by diffusion.

EU patent EPO752027 covers esterfication of lignin. The lignin is utilised from kraft black liquor. US patent 5942008 reports the impregnation of a veneer with dyes using pressure impregnation.

Further, a cross-linking of chitosan and lignin with polycarboxylic acids is known. Also, known is the depolymerisation step to reduce the molecules molecular weight.

The problem with plywood is that flat plywood is very difficult to maintain with changing humidity. Also, the use of plywood for outdoor applications is limited owing to swelling, twisting and shrinking of the wood.

From US 2009/011214 is known a polymer composition suitable for the wood treatment. From US 2008/246177 is known an aqueous composition suitable for the production of moldings. From US 4276329 is known a method for treating wood with sufficient water dilutable resin. From WO 2005/042175 is known methods of strengthening and/or protecting wood products with reactive monomers and other impregnable materials.

From WO 2005/016606 it is known to impregnate wood with a curable monomer and provide a diffusion step prior to curing, during which the monomer can penetrate the cell wall.

### OBJECTIVE OF THE INVENTION

The objective of the invention is to disclose a new type of method for impregnating chemicals into wood, e.g. into a wood product.

### SUMMARY OF THE INVENTION

A method according to the invention is characterized by what is presented in the claims.

The invention is based on a method for impregnating chemicals into wood, e.g. into a wood product. In accordance with the invention, the chemicals include a cross-linking agent having carboxyl groups and a low molecular weight oligomer for flexibility having reactive -OH groups, the cross-linking agent being reactive with -OH groups of the wood and the low molecular weight oligomer and molecular weight of the low molecular weight oligomer being less than 1000 g/mol; and the chemicals are impregnated into the bulk of the wood and the chemicals are allowed to diffuse into the cell wall of the wood during 1 - 7 days at temperatures 25 - 60 °C after the impregnation and a crosslinking is carried out after the diffusion so that the carboxyl groups of the cross-linking agent form ester cross-linking bonds with -OH groups of the wood and/or low molecular weight oligomer in the wood cell wall for improving dimensional stability of the wood product. The chemicals are impregnated into the bulk of the wood and into the wood cell wall. Preferably the impregnation of the chemicals is improved by the diffusion of the chemicals into the wood cell wall. In a preferable embodiment, at first stage a cyclic anhydride is formed from the acid. This intermediate reacts by ring opening and forming ester bonds with the wood and low molecular weight oligomer.

The invention is specifically based on the natural impregnation of the wood where there is cross-linking of the low molecular weight oligomer, e.g. chitosan, lignin, hemicelluloses or cellulose, with the cross-linking agent, like polycarboxylic acids, e.g. citric acid, in the wood cell wall. Preferably, the chemicals are impregnated into the wood cell wall followed by the cross-linking in the wood cell wall. The impregnation chemicals including a cross-linking agent, e.g. polycarboxylic acid, and a low molecular weight oligomer, e.g. chitosan, lignin, or hemicellulose, and alternatively a catalyst, e.g. SHP or citric acid, are impregnated via non-invasive pressure methods into the cell wall. Penetration into the cell wall of the wood is via depolymerisation of the molecule to a suitable oligomer size.

In this context, a wood product can be selected from the group: a wood board, veneer of the wood board, timber, composite product, beam and the like. The wood board can be a wood panel product, plywood product, composite product, pressed panel product or the like, formed of a number of layers, preferably veneer layers, and principally of wood-based materials, in which the layers are laid one upon the other and glued together. The veneer can be formed of any material, e.g. wood-based material, fiber material, composite material or the like. In this context, the veneer refers to any layer or veneer of the wood board. Typically the veneer is a thin layer of the wood board. The thicknesses of the veneer layers can vary.

In one embodiment of the invention the cross-linking agent is polycarboxylic acid. Polycarboxylic acid has three or more carboxyl groups in order to cross-link e.g. cellulose by reaction with hydroxyl groups of cellulose.

In one embodiment of the invention the polycarboxylic acid is selected from the group: 1,2,3,4-butanetetracarboxylic acid, citric acid, maleic acid, succinic acid, itaconic acid, trans-aconitic acid, cis-aconitic acid, tricarballylic acid, 1,2,3-benzenetricarboxylic acid, 1,2,4-benzenetricarboxylic acid, 1,2,3,4-cyclobutanetetracarboxylic acid, tetrahydrofuran-2,3,4,5-tetracarboxylic acid, 1,2,4,5-benzenecarboxylic acid, poly-maleic anhydride and their combinations.

In one embodiment of the invention the low molecular weight oligomer is selected from the group: chitosan, starch, cellulose, lignin, lignin sulfonate, fatty acids, tannin, proteins, sugars, e.g. glucose, sorbitol or xylitol, polyvinyl alcohol, furfuryl alcohol, hemicellulose, alginic acid, pectins, hyaluronic acid, glucosamine, polyethylene glycol, oligomer fragments and their derivates, their monomers and their combinations. The oligomer/monomer with molecular weight less than 1000 g/mol, molar volume less than 100 cm³/mol and molecule size less than 2 nm is the favorable oligomer.

Chitosan is a naturally occurring polysaccharide and is cationic in nature composed of mainly (1,4) linked 2-amino-2-deoxy-β-D-glucan and soluble in acidic solutions but insoluble in alkaline solutions. Both the amino groups in the chitosan molecule are pH sensitive. Chitosan is a derivative from shells and possesses a primary amine group on its polysaccharide ring which may be grafted onto wood by incorporation of a bi-functional cross-linking agent. However, at low pH the free amines are protonated and therefore can only form a salt linkage with the chitosan amino groups.

Cellulose is also a polysaccharide and will therefore cross-links in similar manner as chitosan.

In this context, the oligomer refers to any oligomers, polymers and monomers. Preferably the polymers are de-polymerized into oligomers and/or monomers.

In one embodiment of the invention the oligomer is de-polymerized for reducing the molecular weight of the oligomer in order to form the low molecular weight oligomer and at the same time activating or increasing the reactivity of the oligomer before the impregnation. Often the oligomer is too big to penetrate into the cell wall; therefore the oligomer has to be de-polymerized. In the case of the small molecules they can be impregnated to wood without further processing but larger molecules need to be de-polymerized first. For example, in the case of molecular weight of polyethylene glycol is more than 1000 g/mol or molar volume is more than 100 cm³ mole⁻¹ it is necessary to de-polymerize before impregnation. In the case of molecular weight of polyethylene glycol is less than 1000 g/mol or molar volume is less than 100 cm³ mole⁻¹ it is already small enough to be impregnated. In one embodiment molecular fragments of the oligomer are less than 4 nm, preferably 1 - 2 nm. When the oligomers are reduced in molecular weight they are more soluble in water.

In a preferable embodiment the oligomer is de-polymerized by oxidation. In one embodiment the oxidation is carried out with hydrogen peroxide, hydrogen peroxide and sodium nitrite (NaNO₂), hydrogen peroxide and sodium nitrate (NaNO₃) or other hydrogen peroxide combinations. In one alternatively embodiment the de-polymerization method is selected from the group; acid hydrolysis, ozonation, entzymatic treatment and physical methods.

In one embodiment of the invention the chemicals includes a catalyst.

In one embodiment of the invention the catalyst is selected from the group: sodium hypophosphite monohydrate (SHP), sodium hypophosphite (NaH₂PO₂), sodium phosphate (NaH₂PO₄), sodium phosphinate monohydrate (NaH₂PO₂H₂O), potassium phosphate, ammonium phosphate, titanium dioxide, P-toluenesulfonic acid hydrate (PTSA) and their combinations and other neutral catalysts, citric acid and other acid catalysts. In one embodiment the amount of the catalyst is 0,1 - 5 %. In one embodiment the catalysts used are heat sensitive and therefore cross-linking will not occur until a certain temperature is reached. In one embodiment temperature is the catalyst. Therefore at room temperature there will not be any cross-linking so that diffusion into the cell wall of the chemicals is not hindered. In one embodiment the maximum cross-linking occurs at temperatures 120 - 170 °C, preferably time is 15 minutes to 24 hours, which are not typical temperatures and times used in the production of the wood product, e.g. during the gluing process of the wood board. Therefore, it is necessary to partially cure before hot pressing and this possible by an oven or other means. However, it is important to mention that there will be some cross-linking at lower temperatures and this is important with regards to the temperature applied for diffusion. High temperatures are desirable for increasing the rate of diffusion but it is important that the temperature does not activate the cross-linking or the chemicals will cross-link before diffusing into the cell wall.

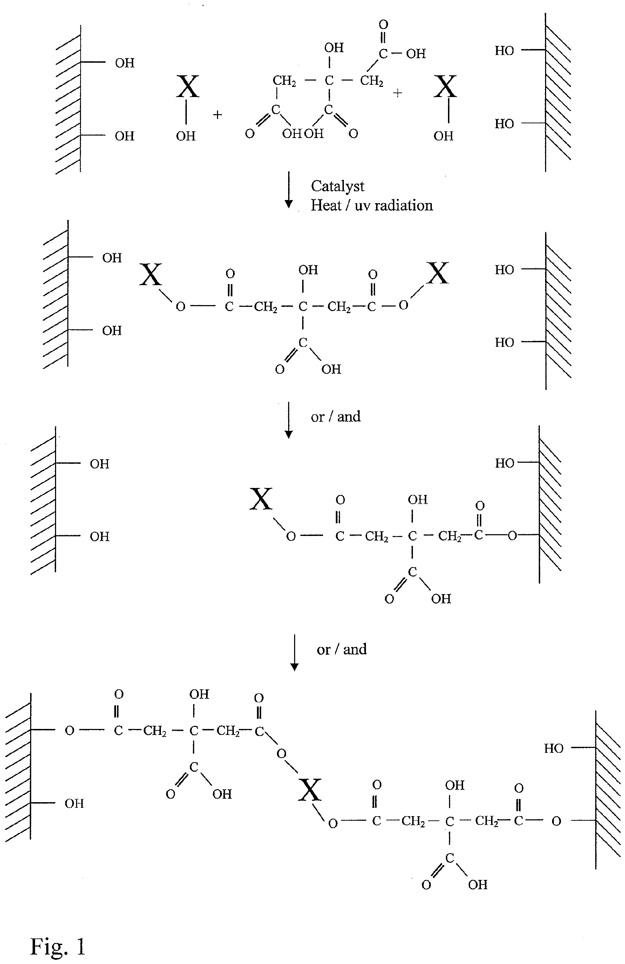

In figure 1 is disclosed a generic mechanism of the reaction between polycarboxylic acids and the low molecular weight oligomer in the wood cell wall. In one embodiment X can be polysaccharide oligomers, lignin oligomers, hemicellulose oligomers, polyethylene glycol low molecular weight or glycol oligomers.

In one embodiment of the invention the chemicals contain colour dyes, biocides, fire retardants, water repellents, dimensional stabilisers, pigments, bio-resistant agents, florescent particles, fatty acids, modified fatty acids, oils, densification resins, bio-oils, emulsions, hardeners, plastizisers, UV-stabilizers, UV-absorbers, UV-hals, other wood modification agent or their derivates or their combinations. These other chemicals can also be impregnated into the cell wall of the wood.

In one embodiment the chemicals contain densification resins that consist of petrochemical based phenols, e.g. phenol formaldehyde resins, resins with bio-phenol substitutes, e.g. from bio-oil, or resins with bio-phenols as the major component and any of these combinations. These chemicals can also be impregnated into the cell wall of the wood. Resin curing, while densifying with or without applied pressure, is possible by heat or radiation, e.g. by microwave, E-beam and X-ray treatment, for deeper penetration.

In one embodiment the oligomers do not need to be depolymerised so small and they can be impregnated and polymerized/cross-linked in the wood lumen. This will allow for improvement on water repellency and other properties such as increased hardness.

Dyes with a molecular size small enough to penetrate into the bulk of the wood (enter cracks, pores and pits) are required or the dyes will only remain on the wood surface. The aim is to dye the wood product so the dye penetrates through the wood product resulting in a consistent colour, therefore it is required that the dye enters the cell wall. The dye molecular weight should be less than 700 g/mol and molecular size 2 - 4 nm. Quite many dyes are too big. Suitable dyes are e.g. trichromatic dyes, basic dye, like crystal violet, safranin, basic fuchsin, methylene blueand aniline, acid dyes like amido black and woodstain scarlet, direct dyes, natural dyes and Azo dyes. If the dyes are strongly absorbed into the wood cell wall, such as basic dyes, then there will not be even penetration into the bulk of the wood. Basic dyes are preferred and they are highly water soluble and possess a positive charge (cationic) and will react with material that is negatively charged (hydroxyl groups). The cellulose of the wood cell wall is negatively charged. Penetration of the dye into the wood is a combination of dye molecular size, concentration and temperature. At temperatures greater than 50 °C the penetration is deep into the wood cell wall.

Chitosan is a natural biocide. It is considered the biocidal action is due to the amines on the molecule. In one embodiment the chitosan cross-linking with polycarboxylic acids can be combined with dyes. Chitosan has an extremely high affinity for many classes of dyes and at low pH chitosan's free amines are protonated which results in attraction of anionic dyes.

Fire retardants from the following groups or combinations that take advantage of the synergisms of these fire retardants are preferred: Phosphorous based, such as phosphoric acid H₃PO₄ and phosphonates OP(OR)₂R), Boron based, such as boric acid H₃BO₃, metaboric acid HBO₃, boric oxide B₂O₃, borax Na₂O·2B₂O₃·10H₂O, anhydrous borax Na₂B₄O₇, sodium tetraborate X-hydrate Na₂B₄O₇·*X*H₂O, borax + boric acid (BBA) Na₂O·2B₂O₃·10H₂O + H₃BO₃ and sodium borate + boric acid Na₂B₄O₇ + H₃BO₃, Nitrogen based, such as melamine C₃H₆N₆, urea CH₄N₂O, dicyandiamide C₂H₄N₄ and guanidine CH₅N₃, Combined nitrogen-phosphorous systems, such as monoammonium phosphate (MAP) NH₄H₂PO₄, diammoniumphosphate (DAP) (NH₄)₂HPO₄, ammonium polyphosphates (APP) [NH₄PO₃]n, poly ammoniumpolyphosphate (PAP) NH₄O(NH₄ PO₃)ₙNH₄, melamine phosphate C₃H₆N₆·(H₃O₄P)ₙ, guanylurea phosphate (GUP) C₂H₆N₄O·H₃PO₄ and guanidine phosphate CH₅N₃·H₃PO₄, Combined sulphur-nitrogen phosphate systems, such as ammonium sulphate (NH₄)₂SO₄ and ammonium sulphamate NH₄SONH₂, Silica based, such as sodium silicates Na₂SiO₃ and potassium silicates K₂SiO₃, and Metal hydrates, such as aluminium hydroxide Al(OH)₃ and magnesium hydroxide Mg(OH)₂. In addition to these there are other inorganic and organic salts that can be used as a fire retardant, such as aluminium sulphate Al₂(SO₄)₃, formates like potassium formate KCOOH and citrates [C₆H₅O₇]³⁻.

Biocides from the following groups are preferred: Benzyl-C12-16-alkyldimethyl, Bis-(N cyclohexyldiazeniumdioxy)-copper (C₁₂H₂₂CuN₄O₄), Didecyldimethylammonium chloride (C₂₂H₄₈ClN), Didecyl polyoxyethyl ammonium borate, Polymeric Betain, Disodium octaborate tetrahydrate (Na₂B₈O₁₃.4H₂O), Copper(II)hydroxide carbonate (CuCO₃·Cu·(OH)₂), Sodium borate decahydrate, Borax (Na₂O·2B₂O₃·10H₂O), Boric acid (H₃BO₃), Propiconatzole (C₁₅H₁₇Cl₂N₃O₂), N-cyclohexyldiazeniumdioxy potassium, Xyligen (C₆H₁₁KN₂O₂), Cypermethrin (C₂₂H₁₉Cl₂NO₃), Tebuconazole (C₁₆H₂₂ClN₃O) and Trimethyl coco ammonium chloride.

In one embodiment the chemicals form the cross-linking material which is preferably not too brittle.

In one embodiment of the invention the impregnation is carried out in one process step.

In one embodiment of the invention the impregnation is carried out at least two process steps.

In one embodiment of the invention the wood or the wood product is treated prior to the impregnation. The wood or the wood product can be treated by drying, rewetting or vacuum treating. In an alternatively embodiment the wood is in green state.

In one embodiment impregnation of the chemicals into the cell wall involves two process steps. The first step is the up-take of the chemicals into the bulk of the wood. This can incorporate woods own natural vacuum induced by a vacuum, vacuum box or hot-cold bath/shower/roller. In addition to this a contact press and/or hot and cold pressure rollers or suction rollers can also be utilized. The second step is a slower process and involves diffusion of the chemicals through to the cell wall. Diffusion is a process of migration from high to low concentration and therefore green wood impregnates quicker. However, if it not necessary to diffuse into the wood cell wall then this step is not required and it is better to use dry wood, as the vacuum is more efficient. Other factors that will affect the diffusion are concentration and temperature. At temperatures greater than room temperature, preferably greater than 50 °C, the diffusion time is significantly reduced and the depth of penetration increased.

Incorporation of the chemicals into the bulk of the wood is the main focus. For this wood modification technique to be fully effective the fact that this method is followed by diffusion into the cell wall is important. Therefore the wood needs to either first be vacuum treated to remove air from the cell wall or the wood needs to be in its green state. It is possible to treat wood that have air in the cell wall but the diffusion stage will be slower.

The chemicals are impregnated into the bulk of the wood, such as green wood, dry wood, wet wood, rewetted wood or vacuum treated wood, by a variety of methods or combination of the methods. In the case of spruce once the wood dries it is almost impossible to impregnate the heartwood. The reason for this is the pits become aspirated. Considering this the wood should be impregnated in its green state. This is possible if the wood or wood product for impregnation is selected after sorting by moisture. When spruce is in its green state it is easier to impregnate than birch.

In the case of dimensional stability the chemicals are required to diffuse through to the wood cell wall and this process takes some time 1 - 7 days depending on the size and shape of the diffusing molecule and also the initial conditions of the wood, e.g. dry, green, re-wetted or vacuum treated wood. However, this time is increased if the chemicals first need to diffuse through to the bulk of the wood. In one embodiment the diffusion is carried out at temperatures 25 - 60 °C, which do not activate the cross-linking.

The impregnation of wood with a cell wall penetrating substance depends upon the macroscopic property of permeation and diffusion at a cellular level. Diffusion is dependent upon a concentration gradient and is hence an entropically driven process. The rate of diffusion depends upon the diffusion coefficient, temperature, and concentration of the chemicals. Despite the small physical dimensions of the cell wall, diffusion into the cell wall is relatively slow because of the labyrinthine nature of the cell wall micro-pore geometry. Although the cell wall structure exhibits a lamellar morphology due to the way in which cellulose micro-fibrils are laid down, the geometry of the space between the micro-fibrils in which the reagent molecules must move is determined by the hemicellulose-lignin matrix, resulting in a complex geometry.

Diffusion is a molecular-scale property and is related to the interior cell wall micro-pore geometry, molecular size and shape of impregnation chemicals. Maximum accessibility to the interior of the wood cell wall is achieved when the wood is in a swollen state, most readily achieved by water saturation of the material. There are no permanent capillaries in the cell walls. When water is desorbed during drying, the microfibrils in the cell walls move closer together (shrinking). After re-wetting, the microfibrils move apart again (swelling), but not necessarily to the same positions as before, with water occupying all the spaces between microfibrils. Dimensions of the cell wall micropores vary, depending upon method of measurement, but the technique of solute exclusion which is a determinant of cell wall accessibility, returns values for the diameter of the order of less than 2 - 4 nm. This means that any molecule with a diameter greater than 2 - 4 nm will not be capable of penetrating the cell wall of lignified material. This does not prevent quite large molecules such as polyethylene glycols from diffusing into the cell wall, if the molecules are watersoluble, linear and exhibit good flexibility along the backbone. However, branched molecules will be less able to gain access to the cell wall interior. It has been stated that molecules having a molar volume greater than 100 cm³ mole⁻¹ are not capable of gaining access to the cell wall.

Preferably the process of the invention does not involve pressure vessels. Preferably the method is provided without a pressure impregnation.

In one embodiment of the invention the chemicals are impregnated into the wood cell wall by a hot-cold thermal process. The thermal process can be applied to dry wood and green wood but since gases expand and contract more than liquids it stands to reason that the vacuum created for air filled wood will be more affective. Therefore, dry wood is used if the chemicals only need to impregnate the bulk of the wood. However, if the chemicals are required to diffuse into the wood cell wall after this step it is important that the cell wall contains water or a vacuum and therefore green or rewetted (not for spruce) should be used. When used properly the method provides a reasonably effective substitute for pressure impregnation. This method is not limited to the type of impregnation chemicals, but both water- and oil-borne chemicals can be used. When the wood is immersed in hot water/impregnation chemicals the air and/or water in the wood expands and when placed in cold impregnation chemical bath the air and/ or water contracts creating a vacuum, causing the treatment solution to be drawn into the wood.

In one embodiment wood samples (green, rewetted or dry) are first immersed into a hot solution of the impregnation solution or just hot water. The most of the chemicals are absorbed during the cold bath. Alternatively, the dry wood samples can be placed in an oven, hot-pressed, steamed or hot water sprayed, or taken straight from the dryer after peeling. This step is followed by immersion into a cold solution of the impregnation chemicals, by chemical spray from a shower or by application by a roller.

In one embodiment the hot-treatment is carried out at temperatures between 60 and 100 °C. In one embodiment the cold-treatment is carried out at temperatures between 0 and 23 °C.

In one embodiment of the invention the impregnation is carried out under vacuum conditions. In one embodiment a vacuum box or vacuum roller is used in the impregnation process. A vacuum is applied to incorporate the chemicals into the bulk of the wood. If the chemicals are required to diffuse into the cell wall then it is important that the cell wall is not filled with air. Therefore, either green or rewetted wood can be used or a vacuum can be first applied using the vacuum system to remove air from the cell wall and then the chemicals can then be applied with or without further vacuum.

In one embodiment of the invention a contact press is used in the impregnation process utilizing vacuum, pressure and temperature. The contact press can be used for green, rewetted or dry wood. However, best results will be achieved by applying dry wood and then using a vacuum followed by applying a pressure. After this process the impregnated wood or wood product should remain wet to allow for the impregnation chemicals to diffuse into the wood cell wall.

In one embodiment the wood or wood product can be soaked and dipped into chemicals. This technique is successful to varying degrees and depends on the type of wood, its initial status (green, rewetted or dry) and temperature. This technique results in best results when a vacuum is first applied to the wood or wood product.

Said impregnation techniques work well individually or can be combined. The technique applied depends on the desired impregnation effect and depth of penetration and if diffusion into the cell wall is necessary. It may in the case of fire retardants, some dyes, biocides, oils, fatty acids and emulsions to simply impregnate the chemicals into the bulk of the wood only.

Improving the penetration, like increasing the absorption of chemicals or accelerating the treatment rate, to the bulk of the wood is possible by methods like heating, incising, microwaving, plasma treatment, compression, water treatment, steaming, micro-organisms, enzyme treatment, chemical treatment, increasing the peeling checks during peeling of the veneers, etc.

In one embodiment peeling checks of continuous veneer are opened with a roller, and the surface area of veneer is increases. While opening the peeling checks, veneer is impregnated by soaking or spraying. Vacuum can be applied by using a vacuum roller in opening the checks. After a roller and impregnation phase, the peeling checks are closed and the impregnation chemicals remain inside the veneer.

In one embodiment of the cross-linking it is partly carried out in connection with the wood product manufacturing, e.g. in a gluing of the veneers and/or in a hot-pressing of the wood product. In one embodiment the hot-pressing can be carried out at temperatures 120 - 170 °C for curing the glue and completing the cross-linking in the cell wall. In one embodiment polycarboxylic acids have two or more carboxyl groups to cross-link e.g. cellulose by reaction with hydroxyl groups of cellulose. Chitosan, cellulose, lignin and hemicellulose are relatively insoluble in water. However, their oligomers are water soluble and therefore will be leached out unless they are cross-linked, polymerised or bonded to the wood cell wall. The mechanism by which polycarboxylic acids react with e.g. cellulose is esterfication by bifunctional carboxylic acids via the formation of cyclic anhydride intermediates.

In one embodiment the cross-linking is carried out after the wood product manufacturing, e.g. at the end of the production line. In one embodiment the curing of the glue and the cross-linking in the cell wall is performed by radiation treatment, e.g. by E-beam, microwave and/or X-ray treatment.

Preferably, each wood product or each part of the wood product can be impregnated wholly or partly.

The method can be carried out using apparatuses known per se. Impregnating the chemicals, laying the veneers one upon the other, joining the veneers together by glue, manufacturing the wood product and other typical steps can be performed in any manner known per se in the art. The veneers of the wood board can be joined together using any adhesive or glue, e.g. phenol formaldehyde, melamine urea formaldehyde or their combinations or said resin substituted or partially substituted with bio-phenols, or bio-adhesive or self-adhesive, or utilizing the impregnation chemicals as an adhesive. In one embodiment the impregnated veneers can be bonded with self-adhesive polyolefin films, as defined in patent applications PCT/FI2009/050130 and PCT/FI2009/050662, to create a wood board that has strength properties and fibre breakage percentage that exceeds that of phenol formaldehyde bonded wood board. This type of adhesive does not require room to penetrate into the cell wall, unlike the phenolic resin.

In one embodiment the modified veneers are plasma treated to improve the bondability.

The method according to the invention may be used in different embodiments.

The invention provides the advantage that the impregnation of the chemicals into the wood is easy to carry out. Thanks to the invention, it is possible to provide many different wood products, e.g. a wood board, a veneer of the wood board and timber modifications. This invention produces the wood product with increased dimensional stability and biological durability. The on-line impregnation of the wood or wood product to incorporate chemicals into the wood cell wall to change the woods performance in various applications is highly sort.

An advantage of the invention is that the method is cost effective. This technique does not require pressure vessels, and can be integrated in the plywood manufacturing line.

The method in accordance with the invention is suitable for various applications.

### LIST OF FIGURES

In the following, the invention is described by means of detailed embodiment examples with reference to accompanying figures 1 - 11, in which
Fig. 1 shows a generic mechanism of the reaction between polycarboxylic acids and the low molecular weight oligomer in the wood cell wall,
Fig. 2 shows a mechanism of a cross-linking of chitosan in wood cell wall,
Fig. 3 shows a mechanism of a cross-linking of chitosan in wood cell wall to create substitution,
Fig. 4 shows a mechanism of a cross-linking of chitosan with citric acid in wood cell wall,
Fig. 5 shows weight percent gain of wood impregnated with different concentrations of chitosan oligosaccharides produced using hydrogen peroxide,
Fig. 6 shows weight percent gains and dimensional swelling in both radial- and tangential directions of treated wood before and after one cycle leaching,
Fig. 7 shows different wood impregnation methods,
Fig. 8 shows a schedule of a process according to the invention,
Fig. 9 shows results from different treatments of wood,
Fig 10 shows impregnation results, and
Fig 11 shows results from test 8.

### DETAILED DESCRIPTION OF THE INVENTION

### Example 1

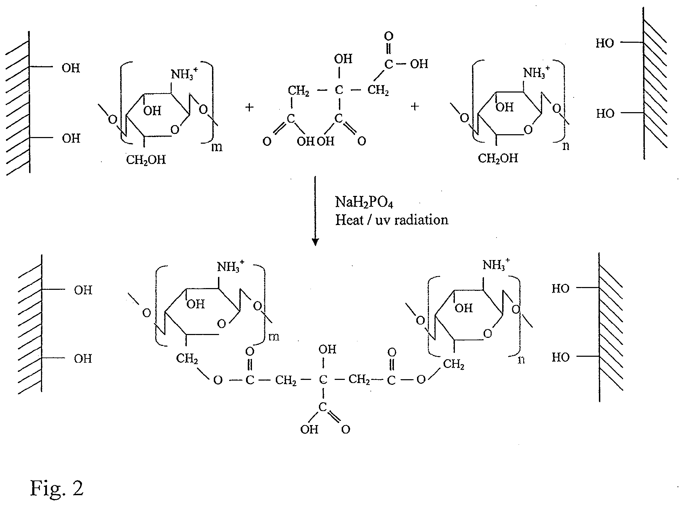

In this example it is disclosed different cross-linking mechanisms. Polycarboxylic acids having two or more carboxyl groups are cross-linked with chitosan by reaction with hydroxyl groups of cellulose. Whichever a cross-linking agent, such as polycarboxylic acids, is used or the low molecular weight oligomer is applied there is three possible mechanisms occurring and any of the three or a combination of them may be occurring at any one time. The three mechanisms are depicted in figures 2 - 4 for cross-linking of chitosan with citric acid. Generally, the mechanisms focus on the esterfication of chitosan with a polycarboxylic acid (citric acid); however, the polycarboxylic acid can react with the protonated amine groups in chitosan but they only form a salt linkage with the chitosan amino groups. While both reactions can be occurring the esterfication is most dominant.

Mechanism 1 shown in figure 2 is a cross-linking of the chitosan to form a larger molecule. The chitosan cross-links by utilisation of the cross-linking agent and the catalyst facilitates the reactions so that the chitosan is partially polymerised. This form of cross-linking ultimately results in cell wall bulking and if the reaction is sufficient it can be enough to improve dimensional stability.

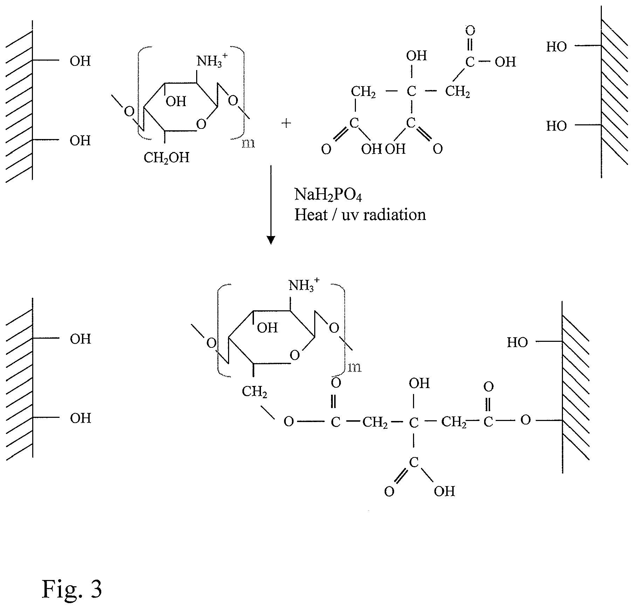

Mechanism 2 shown in figure 3 is a cross-linking of chitosan in wood cell wall to create a substitution. The substitution of wood cell wall hydroxyl groups is provided with citric acid-chitosan molecule. The chitosan cross-links to the citric acid by utilisation of the cross-linking agent and the other part of the citric acid bonds to the woods hydroxyl groups forming an ester bond with wood. This half cross-link is actually substitution of woods hydroxyl groups with a bigger molecule.

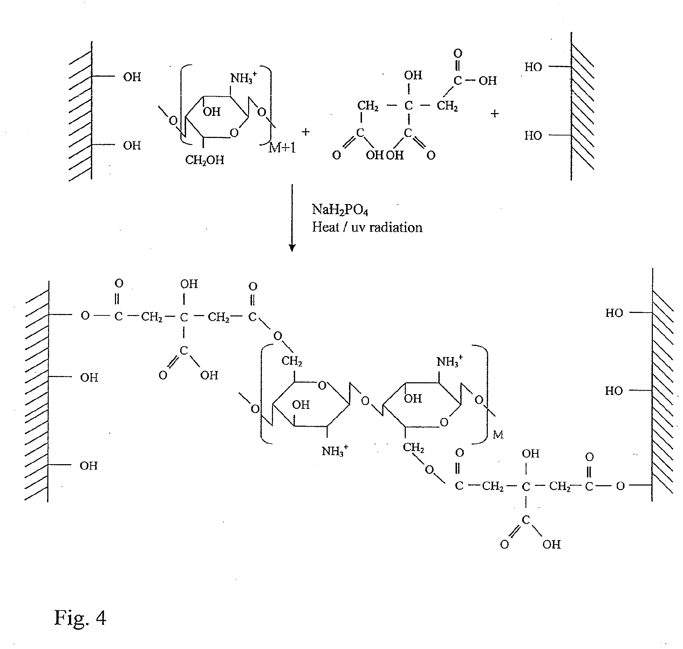

Mechanism 3 shown in figure 4 is a cross-linking of chitosan with citric acid in wood cell wall to create a complete cross-link between woods hydroxyl groups. The chitosan cross-links to the citric acid by utilisation of the cross-linking agent and the other part of the citric acid bonds to the woods hydroxyl groups forming an ester bond with wood. This cross-link is a full cross-link bonding to woods hydroxyl groups on both sides of the cell wall.

The cross-linking mechanism for any other polysaccharide, e.g. cellulose, glucose, chitosan and other oligomers, is considered to be similar to that proposed for chitosan (Figures 2 - 4).

In the case of polyethylene glycol (PEG) molecules (HO-CH₂-(CH₂-O-CH₂-)ₙ-CH₂-OH) they have two end hydroxyl groups which are reactive with polycarboxylic acids, preferably citric acid or BTCA. The polycarboxylic acids are considered to react with the hydroxyl groups of the PEG and wood under a similar mechanism as for chitosan. In the case of lignin oligomers (depolymerised fragments) there are many hydroxyl groups which are now accessible for reaction with other materials, unlike the polymerized lignin. The polycarboxylic acids form ester cross-linking bonds by reaction of the carboxyl groups of the polycarboxylic acid with cellulose hydroxyls in the woods cell wall and/or lignin hydroxyl groups.

### Example 2

In this example, the impregnation of the chemicals was researched.

Treatment of wood with 2.5 % chitosan solution prepared using 0.2 M acetic acid produced a weight percent gain (WPG) of 2.7 %, but did not result in any swelling of the wood in either tangential or radial direction (Table 1). This suggests that chitosan is located in the cell lumens rather than penetrating into the cell wall, because the woods dimensions would increase if chitosan molecules have penetrated into the wood cell wall. The chitosan was all washed out of wood in the first leaching cycle signifying no chemical or physical interaction between wood polysaccharides and chitosan molecules.

Thus, it is concluded that chitosan is far too big and has to be de-polymerized into smaller molecules such as monomer or oligomers in order to penetrate into wood cell wall, and a cross-linker is required to bond the chitosan onto wood.

Table 1 discloses weight percent gain and swelling of wood after treatment with 2.5 % chitosan.

**Table 1**

| | After treatment | | | After leaching | | |
|---|---|---|---|---|---|---|
| | WPG (%) | Swelling (%) | | WPG (%) | Swelling (%) | |
| | | Radial | Tangential | | Radial | Tangential |
| Value | 2.71 | -0.58 | 0.16 | -1.02 | -1.26 | -0.88 |
| STDEV | 0.27 | 0.30 | 0.30 | 0.46 | 0.15 | 0.37 |

Three techniques were utilised to depolymerise the chitosan to chitosan oligosaccharides (COS) and they are as follows (A) 10 % COS prepared by hydrogen peroxide; (B) 10 % COS prepared by Fenton's reagent; (C) 10 % COS solution prepared by Fenton's reagent (after 30 days storage); (D) 10 % COS prepared by NaNO₃. The solutions were stirred for 2 hours at 50 °C to allow for the reactions to occur. Depolymerisation of chitosan in Fenton's reagent resulted in a deep yellow colour which turned dark brown after several days exposure in air. The reaction of chitosan with NaNO₃ was rapid and produced an irritating odour. This is due to the reaction between primary amines in the chitosan with nitrous acid (formation of NaNO₃ in the acidic solution) giving very unstable diazonium salts which spontaneously decompose by losing N₂ to form carbonium ions, which produce a mixture alkenes and alcohols. Finally, chitosan in aqueous 1.0 M H₂O₂ solution generated many bubbles but the viscous solution reduced in viscosity and gradually turned a shallow yellowish colour after 2 hours. The solutions were stored in sealed vessels for 2 months and there was no further colour change.

Depolymerised chitosan was further processed to determine the size of the oligomer fragments using dynamic light scattering on a Malvern Instrument Zetasizer Nano. The main feature that stands out is the presence of one main peak centered at 2 nm. The other higher diameter peaks are relatively weak by comparison and probably represent higher molecular weight material, although aggregation is a possibility. These results indicate that the material is small enough to penetrate the wood cell.

Except for the technique of light scattering, impregnation of wood with the prepared COS oligomer solution can also give an indication of the molecular size. If the molecular size is small enough to penetrate into the cell wall, the cell wall would swell resulting in a larger size of impregnated wood after oven drying. The wood was soaked into the COS oligomer solution which had been produced at least couple of hours previously.

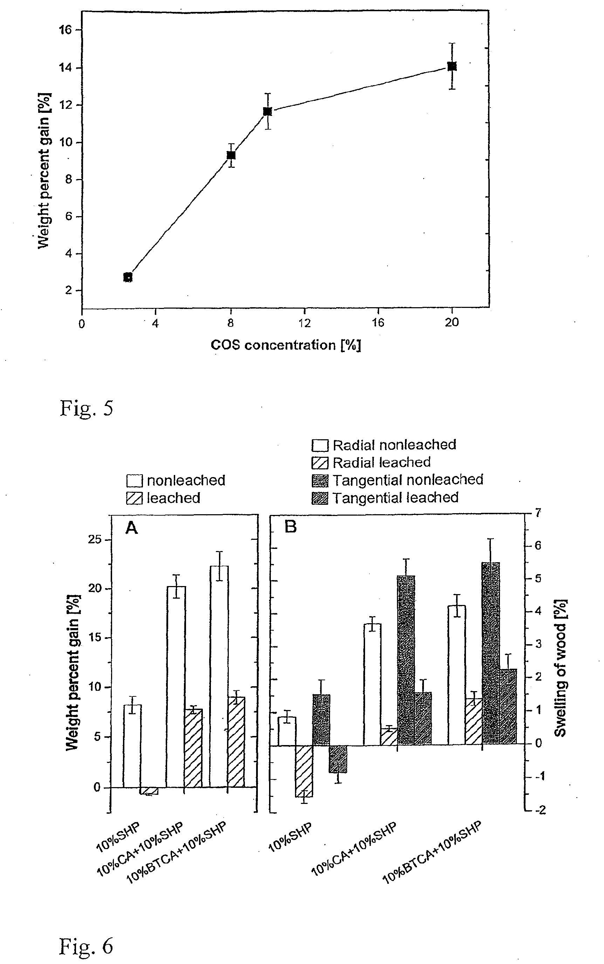

The effect of increasing the chitosan oligomer concentration upon the WPG of treated wood was studied. With an increase of COS concentration, it was more difficult to mix the chitosan evenly into acidic hydrogen peroxide solution. It would take more time for such mixing process. The wood impregnated with these solutions increased weight percent gain with the COS oligomer concentration. At a high concentration of 20 % the weight percent gain of wood was only 2 % greater than for impregnation of 10 % COS oligomer. This may be explained by the fact that the real concentration of COS oligomer may be lower than 20 % because the filtration after the depolymerization stage may remove some insoluble substance and the undegraded high molecular weight molecules. Another reason may be the higher viscosity of 20 % reduces the exchange ratio between COS oligomer solution and the air in the wood cell walls resulting in lower wetting of the cell wall. The results, weight percent gain of wood impregnated with different concentrations of chitosan oligosaccharides produced using hydrogen peroxide, are shown in figure 5. The molar ratio of chitosan and hydrogen peroxide was 1:2.

The radial and tangential swelling of wood increased with the concentration of COS oligomer. The results showed that de-polymerization of chitosan in hydrogen peroxide does result in chitosan that is small enough to penetrate the wood cell wall.

Initially, wood was treated with citric acid or 1,2,3,4-Butanetetracarboxylic acid (BTCA) utilising a SHP catalyst. The treated samples were then washed and subsequently dried for several cycles each including vacuum immersion in the daily changed deionized water for one week and followed by oven drying at 103 °C for 24 h. Figure 6 discloses weight percent gains and dimensional swelling in both radial- and tangential directions of treated wood before and after one cycle leaching. The wood was treated with carboxylic acids and/or catalyst sodium hypophosphite.

Treatment of wood with 10 % citric acid or BTCA using 10 % sodium hypophosphite hydrate (SHP) as catalyst at a curing temperature 110 °C caused similar weight percent gains (20 %) as for citric acid (Fig. 6A). After water leaching for one cycle only 8 % WPG was retained. The weight loss of wood was attributed to leaching out of catalyst the SHP (Fig. 6A) and the unreacted carboxylic acid. Wood swelling due to the deposition of chemicals was reduced from 4 % to 1 % in radial direction and from 5 % to 2 % in tangential direction for both carboxylic acid treatments. Treatment with BTCA had a minor higher level of grafting. The weight percent gains and wood swelling in both radial and tangential direction were further slightly reduced after three cycles each including water saturation of one week and subsequently oven dry 24 h at 110 °C. This suggests that both citric acid and BTCA may penetrate into the wood cell walls and react with the wood polysaccharides.

The reaction of primary amines with carboxylic acid is possible but needs high temperatures in the reactive system. These high temperatures may, however, cause the reduction of wood mechanical strength and darkening of wood surface. In this study, the crosslinking efficiency of polycarboxylic acids was determined at different temperatures for the wood treated with the solution of 10 % citric acid, 10 % SHP, and 10 % glucosamine.

The model of chitosan and glucosamine monomer was used at this stage instead of COS oligomers to better evaluate the reaction possibility and the crosslinking efficiency. Also, at this stage it was not known of the chitosan oligomer was small enough to penetrate the cell wall. The temperature range was set from 80 °C to 140 °C.

The WPG of wood after treatment was 5 % higher when cured at 80 °C compared with 140 °C. This is obviously due to the higher moisture in the wood since the curing at 80 °C for 24 h may not completely remove the wood moisture. Thus, the WPG of wood due to treatment was ca. 30 % as seen for the wood cured at 110 and 140 °C. After one cycle of leaching, the wood cured at 80 °C only retained a minor weight percent gain. Increasing the curing temperature caused an increase of weight percent gain after the first leaching cycle indicating increased crosslinking between wood hydroxyl groups and COS primary amine groups by citric acid. When cured at 140 °C, the treated wood had a weight percent gain of 19 %. Therefore, the stable WPG of 19 % is the crosslinked glucosamine and citric acid. This indicates that the temperature of 140 is sufficient to produce a viable crosslinking reaction. The WPG of treated wood showed a very minor decrease after the second leaching cycle compared to the WPG after the first leaching cycle, which indicates that the crosslinked chemicals were stable to hydrolysis. It should be noted that the increase of WPG from 110 to 140 was not greatly significant. It may thus be possible to use a temperature between 110 and 140 but to cure for a longer time in order to reach a similar fixation level of chemicals.

Treatment of wood resulted in a swelling of 4 % in the radial direction and of 6 % in the tangential direction. Closely related to WPG, the swelling of wood in both radial and tangential directions increased with the curing temperature after the first leaching cycle since the WPG increased. This shows that the amount of chemicals fixed in the cell walls increased with the temperature. After the second leaching cycle, the WPG of treated wood was very close to the WPG after first leaching cycle, indicating that the chemicals were stably fixed in the cell walls. The swelling of wood in the radial direction was less than in the tangential direction which was due to the anisotropy of wood structure in both directions. The radial swelling may be inhibited by the transversal parenchyma cells. That the thinner cell wall and more pits on the radial cell wall than on the tangential cell wall may also cause less swelling in the radial direction.

Although the high temperature promoted the cross-linking reaction between wood hydroxyl groups and glucosamine by citric acid, the color of the wood became dark with increased curing temperature. Treatment with citric acid and SHP curing at 120 °C, however, did not change the colour of wood surface. The colour changes may mainly be attributed to the alkaline glucosamine since the wood impregnated with glucosamine becomes dark after drying at 103 °C.

### Example 3

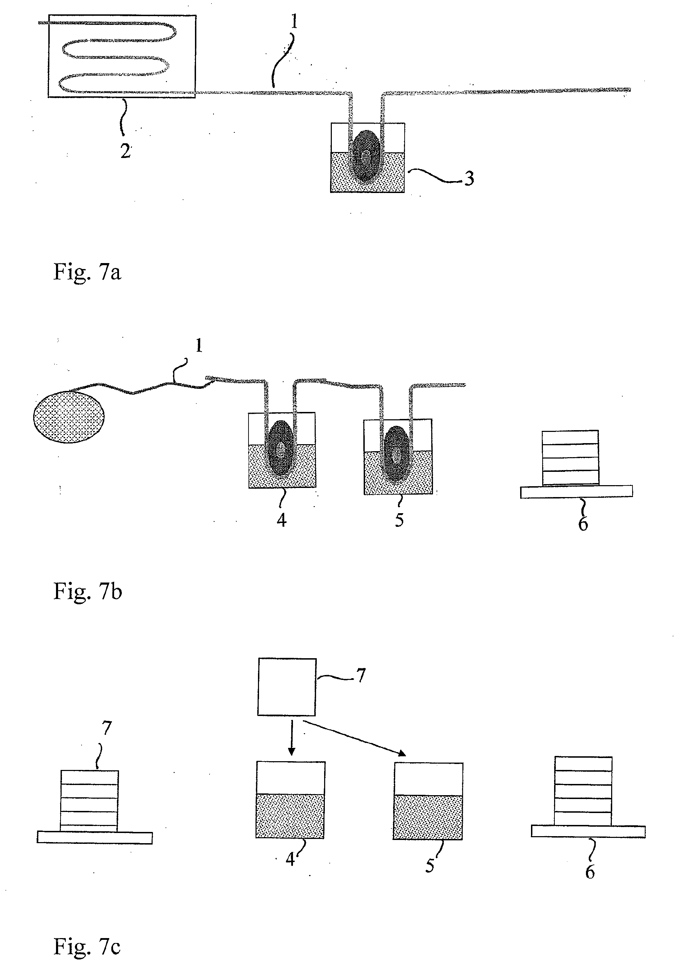

In this example it is disclosed different impregnation methods. The impregnation methods are shown in figures 7A - 7E.

Figure 7A discloses a hot-cold technique in which a hot continuos veneer 1 from a veneer dryer 2 is impregnated in a solution of impregnation chemicals 3 at temperatures 0 - 23 °C.

Figure 7B discloses a hot-cold bath impregnation in which a continuos green veneer 1 after peeling is impregnated in two baths 4 and 5. In first bath 4 the veneer is treated in hot chemicals/water - solution and at temperatures 60 - 100 °C. In second bath 5 the veneer is treated in cold chemical solution at temperatures 0 - 23 °C. After this, the diffusion 6 of chemicals into wood cell wall is made during 1 - 5 days, open air, at control room temperature or under plastic.

Figure 7C discloses a hot-cold bath impregnation in which a stack of wet/dry veneers 7 is impregnated at two stages in baths 4 and 5. At first stage the stack is treated in hot chemicals/water - solution 4 and at temperatures 60 - 100 °C. At second stage the stack is treated in cold chemical solution 5 at temperatures 0 - 23 °C. After these, there are the diffusion 6 of chemicals into wood cell wall and at the same time the drying of the stack.

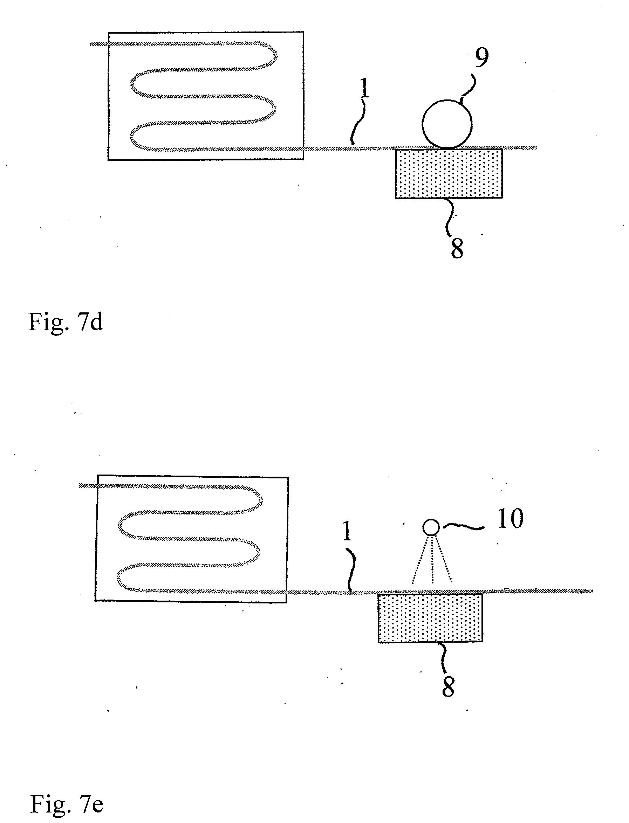

Figure 7D discloses a vacuum system impregnation in which a continuos veneer 1 is impregnated by a vacuum box 8 and a contact roller press 9.

Figure 7E discloses a vacuum system impregnation in which a continuos veneer 1 is impregnated by a vacuum box 8 and a spray 10.

### Example 4

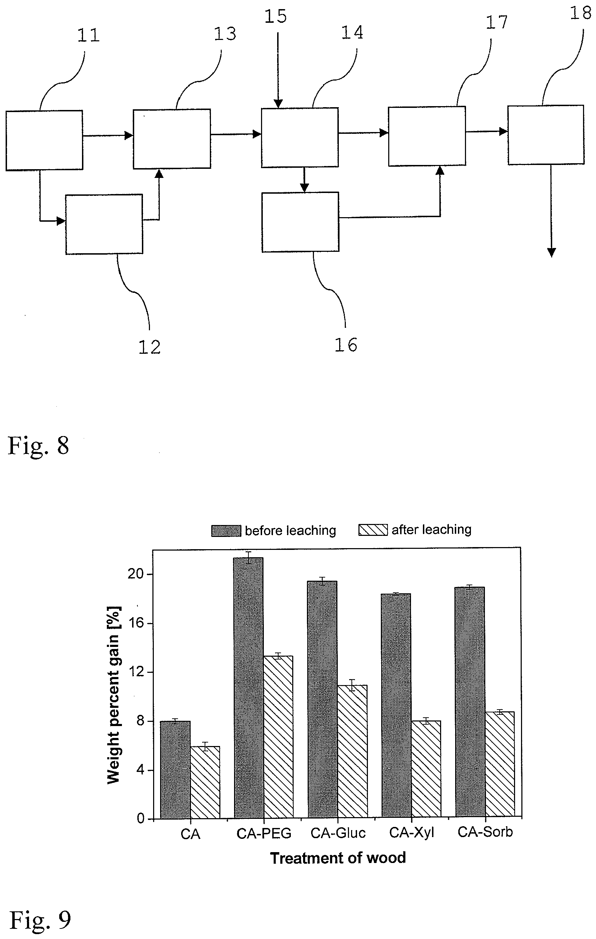

In this example, the plywood is manufactured by the impregnation method of the invention. In figure 8 it is shown a process for impregnating the veneers and manufacturing the plywood.

The process comprises a selection stage 11. At the selection stage there is selected a cross-linking agent and an oligomer and a possible catalyst for a chemical composition. If the oligomer has molar volume more than 100 cm³/mole, molar mass more than 1000 g/mol or size bigger than 2 - 4 nm so the oligomer is depolymerised into low molecular weight oligomers and monomers at a depolymerisation stage 12. All chemicals selected are combined to form the impregnation composition at stage 13.

The process comprises an impregnation stage 14 in which the chemicals are impregnated into the bulk of the wood of the veneers. The veneers 15 are fed into the impregnation stage 14. The veneers can be treated before the impregnation stage, e.g. by drying, heating, wetting, re-wetting, incising, micro-waving, plasma and/or peeling. The impregnation can be made by soaking, hot-cold treating, vacuum treating and/or by contact press. After the impregnation dry or wet veneers can be fed into the diffusion stage 16 in which the chemicals are allowed to diffuse into the cell wall of the wood during 1 - 7 days at temperatures 25 - 60 °C. Veneers can be dried under non-cross-linking conditions before gluing stage. After the diffusion stage the veneers can be fed into a gluing stage 17 in which the veneers are glued together by an adhesive for forming a plywood. Alternatively, after the impregnation the dry or wet veneers can be fed the gluing stage 17 without the diffusion stage.

Further, the process comprises a pressing stage 18 for pressing the veneers together to form the plywood product. The pressing stage 18 comprises hot pressing which is carried out at temperatures 120 - 170 °C. By the hot pressing the adhesive is cured and the cross-linking is made in the cell wall of the wood. In one embodiment the hot pressing stage is followed by the cold pressing stage.

### Example 5

Birch *(Betula pendula)* blocks (20x20x5 mm) were impregnated with treating solutions, containing 5 % citric acid, 10 % alcohol and 2 % SHP, using a vacuum of 10 mbar for 2 h and then left at atmospheric pressure for 1 week to allow for cell wall diffusion. All samples were fully penetrated by the treating solutions using such an impregnation process. After impregnation and diffusion, the samples were air dried for 24 h followed with a 24 hour oven drying process at temperature of 120°C. After treatment process, the wood samples were vacuum impregnated in deionised water for 2 h and then maintained in the water under atmospheric pressure for one week. The water was daily changed with fresh deionised water. After the leaching procedure, the samples were air dried for 2 days and then oven-dried at 103 °C for 24 h. All samples were weighed and the dimensions were measured before and after treatments.

It is shown in Figure 9 that different kinds of alcohols (polyethylene glycol PEG, glucose, xylitol and sorbitol) can be fixed within the wood structure by using citric acid as a cross-linker. The weight percentage gain (WPG) of citric acid after leaching is near 6 %, and more than this for other treatments. This proves that citric acid can be fixed into the wood cell wall, and also that citric acid can be used as a cross-linker for alcohols, when using SHP as a catalyst.

### Example 6

Veneers were treated in four different ways (untreated, water, 10% PEG 600 and 10% PEG 600/5% citric acid), after which they were glued into 7-ply plywood with phenol formaldehyde resin. Results show, that the plywood manufactured from PEG (polyethylene glycol) treated veneer displayed lower thickness swelling than that of either the control plywood or the plywood manufactured from the water-soaked veneers. Compared to the control specimen, the PEG impregnated veneer plywood exhibited about 25 % less swelling than the control, whilst the plywood manufactured from cross-linked PEG modified veneers, exhibited almost 36 % less thickness swelling than the control panel. After 72 h soaking, although the actual thickness swelling of all panels had increased, the percentage improvement in thickness swelling of the PEG treated and cross-linked PEG modified panels relative to the control boards remained about the same. These results indicate that a good degree of dimensional stability has been achieved through veneer modification with cross-linked PEG.

The three-point flexural strength of plywood tested parallel and perpendicular to the face grain direction show that there is no appreciable difference in the strength of the plywood in either orientation, compared to that of the control, indicating that modification does not lead to any decrease in the strength of the plywood. It can also be seen, that veneer modification with cross-linked PEG does not negatively impact on the strength of the plywood to any great extent. The bond quality of the plywood is also not affected by the impregnation chemicals, indicating that good gluing is possible.

Table 2 shows thickness swelling according to EN 317. Table 3 shows bending strength of plywood parallel to face grain according to EN 310. Table 4 shows bending strength of plywood perpendicular to face grain according to EN 310. Table 5 shows bond strength according to EN 314.

**Table 2**

| | Initial | | After soaking for 24h | | | After soaking for 72h | | |
|---|---|---|---|---|---|---|---|---|
| | Thickness [mm] | | Thickness [mm] | | Swelling [%] | Thickness [mm] | | Swelling [%] |
| | Average | Stdev | Average | Stdev | Average | Average | Stdev | Average |
| Plywood | 9,26 | 0,21 | 10,39 | 0,10 | 12,39 % | 10,45 | 0,15 | 13,09 % |
| Water treated plywood | 8,78 | 0,22 | 9,95 | 0,10 | 13,39 % | 9,97 | 0,10 | 13,67 % |
| PEG treated | 9,09 | 0,16 | 9,94 | 0,09 | 9,36 % | 9,99 | 0,10 | 9,92 % |
| PEG+CA treated | 9,77 | 0,14 | 10,55 | 0,08 | 7,97 % | 10,62 | 0,07 | 8,73 % |

**Table 3**

| | Width [mm] | Thickness [mm] | Max F [N] | Strength [N/mm2] |
|---|---|---|---|---|
| Plywood | 50,10 | 9,23 | 1428,72 | 89,76 |
| Water treated plywood | 50,15 | 8,79 | 1416,18 | 98,62 |
| PEG treated | 50,10 | 9,09 | 1372,98 | 89,12 |
| PEG+CA treated | 50,14 | 9,97 | 1590,00 | 85,97 |

**Table 4**

| | Width [mm] | Thickness [mm] | Max F [N] | Strength [N/mm2] |
|---|---|---|---|---|
| Plywood | 50,33 | 9,29 | 908,33 | 56,00 |
| Water treated plywood | 50,35 | 8,77 | 850,14 | 59,03 |
| PEG treated | 50,32 | 9,13 | 843,82 | 54,30 |
| PEG+CA treated | 50,34 | 9,84 | 1032,50 | 56,90 |

**Table 5**

| | Width [mm] | Length [mm] | Area [mm2] | Max F [N] | | Strength [N/mm2] | |
|---|---|---|---|---|---|---|---|
| | | | | Average | Stdev | Average | Stdev |
| Plywood | 24,92 | 25,15 | 626,86 | 2006,74 | 184,35 | 3,20 | 0,30 |
| Water treated plywood | 24,93 | 25,16 | 627,17 | 2441,37 | 370,86 | 3,88 | 0,59 |
| PEG treated | 24,94 | 25,16 | 627,44 | 2026,13 | 179,41 | 3,23 | 0,27 |
| PEG+CA treated | 24,89 | 25,18 | 626,67 | 1701,76 | 198,68 | 2,72 | 0,31 |

### Example 7

Different impregnation techniques covered in the patent were tested, including the Hot-cold shock and Vacuum box method. Both methods, Hot-Cold-Shock and Vacuum box method, enhances the penetration of chemicals into the wood. Thus, the chemicals gets faster in right places, and the chemical diffusion into the wood cell wall starts immediately also within the wood.

### Hot-Cold-Shock

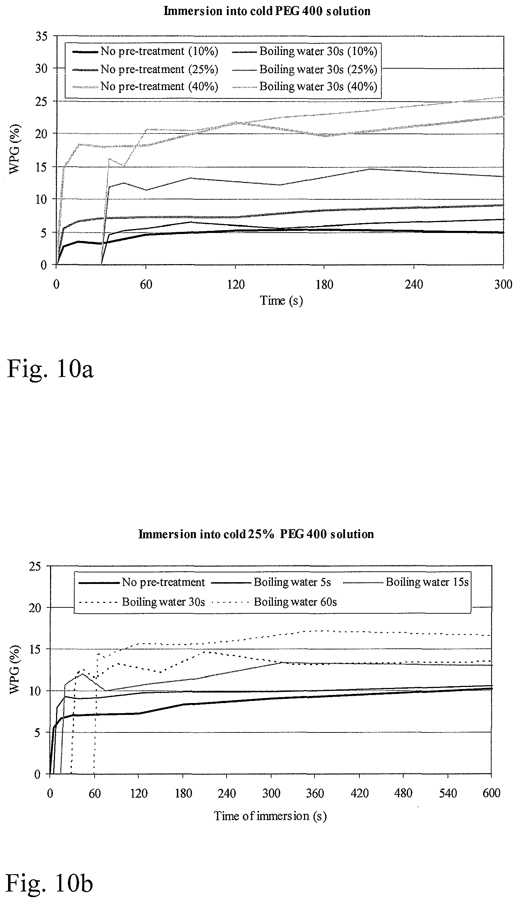

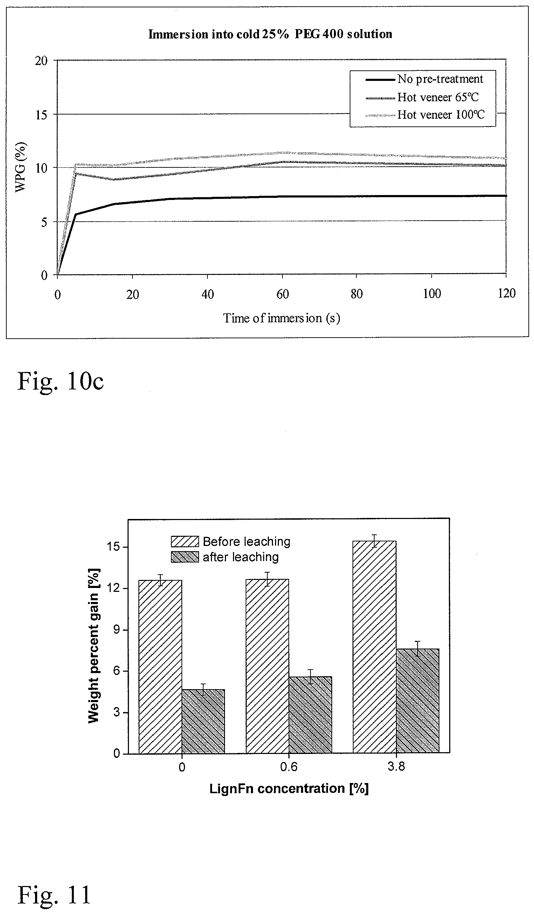

Birch veneers (100x100x1.5 mm) were impregnated with PEG 400 by using Hot-Cold Shock method. All samples were weighed before and after treatments to determine the weight percentage gain (WPG). It is shown that absorption of treatment chemicals (WPG) increase with increasing concentration and boiling time in water. The WPG level can be controlled with these parameters. It is also shown that immersion into hot water can be replaced by using hot veneers. In on-line system, this could be done right after veneer drying. The impregnation results show, that with hot-cold-shock method, the chemical solutions can penetrate into the wood matrix in seconds, which is beneficial when aiming to on-line system. Figure 10a shows immersion into cold PEG 400 solution, figure 10b shows immersion into cold 25 % PEG 400 solution, and figure 10c shows immersion into cold 25 % PEG 400 solution.

### Vacuum box

Birch veneers (600x600x1.5 mm) were impregnated by applying vacuum beneath the veneers (Vacuum box method). It can be seen from the results that with this method, impregnation solution can be sucked through the veneers; actual WPG is lower than theoretical (theoretical = amount of chemicals applied onto the veneers, actual = amount of chemicals remained within the veneers). This is beneficial when aiming into full impregnation. With hot veneers the penetration through the veneer was more efficient. Table 6 shows vacuum box treatment.

**Table 6**

| Vacuum box treatment | WPG (%) | |
|---|---|---|
| | Theorethical | Actual |
| 25 % PEG 400 | 12 | 7 |
| | 24 | 9 |
| 40 % PEG 400 | 19 | 13 |
| | 38 | 16 |
| * Hot veneers | 19 | 10 |

Dry and re-wetted (which in this case represents a greenwood) birch veneers (600x600x1.5 mm) were impregnated with dyed 40%PEG 400 by surface treatment and by applying vacuum beneath the veneers (Vacuum box method). Rate of dye diffusion into the cell wall was visually evaluated from the samples. Tests showed that diffusion rate was better when using re-wetted (green) veneers. Full penetration was achieved faster when used vacuum box method.

### Example 8

Solid kraft lignin sample was depolymerised by using Fenton's reaction. Cellulose filter papers were impregnated with solution containing 5% citric acid, 5% SHP and depolymerised lignin in various concentrations. After impregnation the samples were oven-dried 24 hours at temperature of 120°C. WPG results after leaching indicate lignin and citric acid cross-linking. The yield of Fenton's reaction was very small which is the reason for the low WPG (weight percentage gain). Figure 11 shows the results.

### Example 9

Beech wood samples were treated with solutions containing low molecular weight oligomers (glucosamine GA, glucose GS, polyethylene glycol PEG) and cross-linking agent (citric acid CA) by vacuum impregnation method as described above. Treated samples were exposed to brown rot and white rot fungus (*Coniophora Puteana* and *Trametes Versicolor*) for 12 weeks. Samples were leached before testing. Results showed that mass losses of untreated wood caused by brown rot and white rot fungi were about 35% and 60%, respectively. By wood treatment with low molecular weight oligomers and cross-linking agent, the mass losses could be significantly decreased. With weight percentage gain (WPG) of 15% with GA-CA, 25% with GC-CA and 40% with PEG-CA, the mass loss by brown rot fungi fell below 10% and the mass loss by white rot fungi close to 5%. With 10% WPG of citric acid, the mass losses by both fungi decreased below 5%.

From all the tests it was discovered that a method of the invention is a suitable method to be used for impregnating the chemicals into wood. The method can be easily to use industrially.

A method according to the invention is suitable in its different embodiments for different types of applications.

## Claims

1. A method for impregnating chemicals into wood, **characterized in that** the chemicals include a cross-linking agent having carboxyl groups and a low molecular weight oligomer having reactive - OH groups, the cross-linking agent being reactive with -OH groups of the wood and the low molecular weight oligomer and molecular weight of the low molecular weight oligomer being less than 1000 g/mol; and the chemicals are impregnated into the bulk of the wood and the chemicals are allowed to diffuse into the cell wall of the wood during 1 - 7 days at temperatures 25 - 60 °C, which do not activate the cross-linking, after the impregnation and a cross-linking is carried out after the diffusion so that the carboxyl groups of the cross-linking agent form ester cross-linking bonds with -OH groups of the wood and/or low molecular weight oligomer in the wood cell wall.

2. The method according to claim 1, **characterized in that** the oligomer is de-polymerized for reducing the molecular weight of the oligomer and activating the oligomer before the impregnation.

3. The method according to any one of claims 1 to 2, **characterized in that** the cross-linking agent is polycarboxylic acid.

4. The method according to claim 3, **characterized in that** the polycarboxylic acid is selected from the group: 1,2,3,4-butanetetracarboxylic acid, citric acid, maleic acid, succinic acid, itaconic acid, trans-aconitic acid, cis-aconitic acid, tricarballylic acid, 1,2,3-benzenetricarboxylic acid, 1,2,4-benzenetricarboxylic acid, 1,2,3,4-cyclobutanetetracarboxylic acid, tetrahydrofuran-2,3,4,5-tetracarboxylic acid, 1,2,4,5-benzenecarboxylic acid, poly-maleic anhydride and their combinations.

5. The method according to any one of claims 1 to 4, **characterized in that** the low molecular weight oligomer is selected from the group: chitosan, starch, cellulose, lignin, lignin sulfonate, fatty acids, tannin, proteins, sugars, polyvinyl alcohol, hemicellulose, alginic acid, pectins, hyaluronic acid, glucosamine, polyethylene glycol and their derivates and their combinations.

6. The method according to any one of claims 1 to 5, **characterized in that** the chemicals includes a catalyst.

7. The method according to claim 6, **characterized in that** the catalyst is selected from the group: sodium hypophosphite monohydrate, sodium hypophosphite, sodium phosphate, sodium phosphinate monohydrate, titanium dioxide, potassium phosphate, ammonium phosphate, citric acid, temperature and their combinations.

8. The method according to any one of claims 1 to 7, **characterized in that** the chemicals contain colour dyes, biocides, fire retardants, water repellents, dimensional stabilisers, pigments, bio-resistant agents, fatty acids, oils, densification resins, emulsions, hardeners, plastizisers, UV-stabilizers, UV-absorbers, UV-hals other wood modification agent or their derivates or their combinations.

9. The method according to any one of claims 1 to 8, **characterized in that** the impregnation is carried out in one process step.

10. The method according to any one of claims 1 to 8, **characterized in that** the impregnation is carried out in two process steps.

11. The method according to any one of claims 1 to 8 or 10, **characterized in that** the impregnation is carried out in at least two process steps.

12. The method according to any one of claims 1 to 11, **characterized in that** the wood is treated prior to the impregnation.

13. The method according to any one of claims 1 to 12, **characterized in that** the chemicals are impregnated into the wood cell wall by a hot-cold thermal process.

14. The method according to any one of claims 1 to 13, **characterized in that** the impregnation is carried out under vacuum conditions.

15. The method according to any one of claims 1 to 14, **characterized in that** a contact press is used in the impregnation process.

16. The method according to any one of claims 1 to 15, **characterized in that** the cross-linking is carried out in connection with the wood product manufacturing.

## Patentansprüche

1. Verfahren zum Imprägnieren von Chemikalien in Holz, **dadurch gekennzeichnet, dass** die Chemikalien ein Vernetzungsmittel mit Carboxylgruppen und ein Oligomer mit niedrigem Molekulargewicht mit reaktiven OH-Gruppen enthalten, wobei das Vernetzungsmittel mit - OH-Gruppen des Holzes und mit dem Oligomer niedrigem Molekulargewicht reagiert und das Molekulargewicht des Oligomers mit niedrigem Molekulargewicht weniger als 1000 g / mol ist; und die Chemikalien in die Hauptmasse des Holzes imprägniert sind und die Chemikalien, die die Vernetzung nicht aktivieren, in die Masse des Holzes innerhalb von 1 bis 7 Tagen bei Temperaturen von 25 bis 60°C diffundieren und nach der Imprägnierung und nach der Diffusion wird eine Vernetzung durchgeführt, so dass die Carboxylgruppen des Vernetzungsmittels estervernetzende Bindungen mit -OH-Gruppen des Holzes und/oder dem niedermolekularen Oligomer in der Holzzellwand eingehen.

2. Verfahren nach Anspruch 1, **dadurch gekennzeichnet, dass** das Oligomer zur Verringerung des Molekulargewichts des Oligomers und Aktivierung des Oligomers vor der Imprägnierung entpolymerisiert wird.

3. Verfahren nach einem der Ansprüche 1 bis 2 **dadurch gekennzeichnet, dass** das Vernetzungsmittel Polycarbonsäure ist.

4. Verfahren nach Anspruch 3, **dadurch gekennzeichnet, daß** die Polycarbonsäure aus der Gruppe: 1,2,3,4-Butantetracarbonsäure, Zitronensäure, Maleinsäure, Bernsteinsäure, Itaconsäure, trans-Aconitsäure, cis-Aconitsäure, Tricarballylsäure, 1,2,3-Benzoltricarbonsäure, 1,2,4-Benzoltricarbonsäure, 1,2,3,4-Cyclobutantetracarbonsäure, Tetrahydrofuran-2,3,4,5-tetracarbonsäure, 1,2,4,5-Benzolcarbonsäure, Poly-Maleinsäureanhydrid und ihren Kombinationen ausgewählt ist.

5. Verfahren nach einem der Ansprüche 1 bis 4, **dadurch gekennzeichnet, dass** das Oligomer mit niedrigem Molekulargewicht aus der Gruppe: Chitosan, Stärke, Cellulose, Lignin, Ligninsulfonat, Fettsäuren, Tannin, Proteine, Zucker, Polyvinylalkohol, Hemicellulose, Alginsäure, Pektine, Hyaluronsäure, Glucosamin, Polyethylenglycol und ihren Derivaten und ihren Kombinationen ausgewählt ist.

6. Verfahren nach einem der Ansprüche 1 bis 5, **dadurch gekennzeichnet, dass** die Chemikalien einen Katalysator enthalten.

7. Verfahren nach Anspruch 6, **dadurch gekennzeichnet, dass** der Katalysator aus der Gruppe: Natriumhypophosphitmonohydrat, Natriumhypophosphit, Natriumphosphat, Natriumphosphinatmonohydrat, Titandioxid, Kaliumphosphat, Ammoniumphosphat, Zitronensäure, Temperatur und ihren Kombinationen ausgewählt ist.

8. Verfahren nach einem der Ansprüche 1 bis 7, **dadurch gekennzeichnet, daß** die Chemikalien Farbstoffe, Biozide, Flammschutzmittel, Wasserabstoßungsmittel, Dimensionsstabilisatoren, Pigmente, Bioresistenzmittel, Fettsäuren, Öle, Verdichtungsharze, Emulsionen, Härter, Weichmacher, UV-Stabilisatoren, UV-Absorber, UV-haltige andere Holzmodifizierungsmittel oder deren Derivate oder deren Kombinationen.

9. Verfahren nach einem der Ansprüche 1 bis 8, **dadurch gekennzeichnet, dass** die Imprägnierung in einem Verfahrensschritt durchgeführt wird.

10. Verfahren nach einem der Ansprüche 1 bis 8, **dadurch gekennzeichnet, dass** die Imprägnierung in zwei Prozessschritten durchgeführt wird.

11. Verfahren nach einem der Ansprüche 1 bis 8 oder 10, **dadurch gekennzeichnet, dass** die Imprägnierung in mindestens zwei Prozessschritten durchgeführt wird.

12. Verfahren nach einem der Ansprüche 1 bis 11, **dadurch gekennzeichnet, dass** das Holz vor der Imprägnierung behandelt wird.

13. Verfahren nach einem der Ansprüche 1 bis 12, **dadurch gekennzeichnet, dass** die Chemikalien in die Holzzellwand durch einen Heiß-Kalt-Wärmeprozess imprägniert werden.

14. Verfahren nach einem der Ansprüche 1 bis 13, **dadurch gekennzeichnet, dass** die Imprägnierung unter Vakuumbedingungen durchgeführt wird.

15. Verfahren nach einem der Ansprüche 1 bis 14, **dadurch gekennzeichnet, dass** eine Kontaktpresse im Imprägnierprozess verwendet wird.

16. Verfahren nach einem der Ansprüche 1 bis 15, **dadurch gekennzeichnet, dass** die Vernetzung im Zusammenhang mit der Holzproduktherstellung erfolgt.

## Revendications

1. Procédé pour l'imprégnation de substances chimiques dans du bois, **caractérisé en ce que** les substances chimiques incluent un agent de réticulation ayant des groupes carboxyle et un oligomère de faible masse moléculaire ayant des groupes -OH réactifs, l'agent de réticulation étant réactif avec les groupes -OH du bois et l'oligomère de faible masse moléculaire, et la masse moléculaire de l'oligomère de faible masse moléculaire étant inférieure à 1000 g/mol ; et les substances chimiques sont imprégnées dans la masse du bois et les substances chimiques sont autorisées à diffuser dans la paroi cellulaire du bois pendant 1 à 7 jours à des températures de 25 à 60 °C qui n'activent pas la réticulation, après l'imprégnation, et une réticulation est effectuée après la diffusion de sorte que les groupes carboxyle de l'agent de réticulation forment des liaisons de réticulation ester avec les groupes -OH du bois et/ou de l'oligomère de faible masse moléculaire dans la paroi cellulaire du bois.

2. Procédé selon la revendication 1, **caractérisé en ce que** l'oligomère est dé-polymérisé pour réduire la masse moléculaire de l'oligomère et activer l'oligomère avant l'imprégnation.

3. Procédé selon l'une quelconque des revendications 1 à 2, **caractérisé en ce que** l'agent de réticulation est un acide polycarboxylique.

4. Procédé selon la revendication 3, **caractérisé en ce que** l'acide polycarboxylique est choisi dans le groupe : acide 1,2,3,4-butanetétracarboxylique, acide citrique, acide maléique, acide succinique, acide itaconique, acide trans-aconitique, acide cis-aconitique, acide tri-carballylique, acide 1,2,3-benzènetricarboxylique, acide 1,2,4-benzènetricarboxylique, acide 1,2,3,4-cyclobutanetétracarboxylique, acide tétrahydrofurane-2,3,4,5-tétracarboxylique, acide 1,2,4,5-benzènecarboxylique, poly-anhydride maléique et leurs combinaisons.

5. Procédé selon l'une quelconque des revendications 1 à 4, **caractérisé en ce que** l'oligomère de faible masse moléculaire est choisi dans le groupe : chitosane, amidon, cellulose, lignine, sulfonate de lignine, acides gras, tanin, protéines, sucres, alcool polyvinylique, hémicellulose, acide alginique, pectines, acide hyaluronique, glucosamine, polyéthylène glycol et leurs dérivés et leurs combinaisons.

6. Procédé selon l'une quelconque des revendications 1 à 5, **caractérisé en ce que** les substances chimiques incluent un catalyseur.

7. Procédé selon la revendication 6, **caractérisé en ce que** le catalyseur est choisi dans le groupe : hypophosphite de sodium monohydraté, hypophosphite de sodium, phosphate de sodium, phosphinate de sodium monohydraté, dioxyde de titane, phosphate de potassium, phosphate d'ammonium, acide citrique, température et leurs combinaisons.

8. Procédé selon l'une quelconque des revendications 1 à 7, **caractérisé en ce que** les substances chimiques contiennent des teintures colorantes, des biocides, des produits ignifuges, des hydrofuges, des stabilisants dimensionnels, des pigments, des agents bio-résistants, des acides gras, des huiles, des résines de densification, des émulsions, des durcisseurs, des plastifiants, des agents de stabilisation aux UV, des absorbeurs d'UV, un autre agent de modification du bois de type agent stabilisant aux UV à base d'aminé encombrée (UV-HALS) ou leurs dérivés ou leurs combinaisons.

9. Procédé selon l'une quelconque des revendications 1 à 8, **caractérisé en ce que** l'imprégnation est effectuée dans une étape de processus.

10. Procédé selon l'une quelconque des revendications 1 à 8, **caractérisé en ce que** l'imprégnation est effectuée dans deux étapes de processus.

11. Procédé selon l'une quelconque des revendications 1 à 8 ou 10, **caractérisé en ce que** l'imprégnation est effectuée dans au moins deux étapes de processus.

12. Procédé selon l'une quelconque des revendications 1 à 11, **caractérisé en ce que** le bois est traité avant l'imprégnation.

13. Procédé selon l'une quelconque des revendications 1 à 12, **caractérisé en ce que** les substances chimiques sont imprégnées dans la paroi cellulaire du bois par un processus thermique à chaud-froid.

14. Procédé selon l'une quelconque des revendications 1 à 13, **caractérisé en ce que** l'imprégnation est effectuée dans des conditions sous vide.

15. Procédé selon l'une quelconque des revendications 1 à 14, **caractérisé en ce qu'**une presse à contact est utilisée dans le processus d'imprégnation.

16. Procédé selon l'une quelconque des revendications 1 à 15, **caractérisé en ce que** la réticulation est effectuée en rapport avec la fabrication de produit en bois.
